# EUROPEAN PATENT APPLICATION

(11) **EP 2 775 365 A1**
(43) Date of publication of application: **10.09.2014**
(21) Application number: 12846550.7
(22) Date of filing: 01.11.2012
(51) Int. Cl.: G05D 1/00, G05D 1/02

(54) **REMOTE CONTROL SYSTEM**

(30) Priority: 04.11.2011 JP 2011241892
(71) Applicant: Panasonic Corporation, Osaka 571-8501 (JP)
(72) Inventor: SAKAI, Tatsuo, Osaka-shi, Osaka 540-6207 (JP); MURAI, Ryosuke, Osaka-shi, Osaka 540-6207 (JP); UEMATSU, Hiroyuki, Osaka-shi, Osaka 540-6207 (JP); KINOSHITA, Shintaro, Osaka-shi, Osaka 540-6207 (JP)
(74) Representative: Eisenführ Speiser
(86) International application number: PCT/JP2012/007019
(87) International publication number: WO 2013/065312

(57) **Abstract**

A remote control apparatus (11) includes a moving apparatus (12) that has a control unit (41) that stores map information and a target position and controls a tracking move to the target position along a moving path, and a remote control unit (13) that transmits the target position input by a manipulating unit (32) to the moving apparatus (12), and the control unit (41) detects an input value of the manipulating unit (32) as an amount of change, and autonomously moves the moving apparatus (12) in a tracking manner while changing the target position in accordance with the amount of change.

## Description

### BACKGROUND OF THE INVENTION

The present invention relates to a remote control system manipulating a moving apparatus in a remote place.

Remote control systems that can remotely manipulate moving apparatus in hospitals, commerce facilities, exhibition sites or art museums are desired. The remote control systems enable the moving apparatus to serve as surrogates for workers, and thus improve the efficiency in tasks to be done in the facilities.

For example, the moving apparatus having an interface unit assisting dialogues is disposed in a plurality of hospitals so that dialogs between patients and doctors in remote places can be assisted. Further, for example, the moving apparatus having a monitoring camera is manipulated by a security officer in a remote control room, so that the security officer can keep guard without going to a facility.

Therefore, a remote control system having a remote control apparatus for a manipulation through a manipulator, and a moving apparatus that moves in accordance with manipulator's instructions transmitted from the remote control apparatus is proposed (for example, see Patent Literature 1).

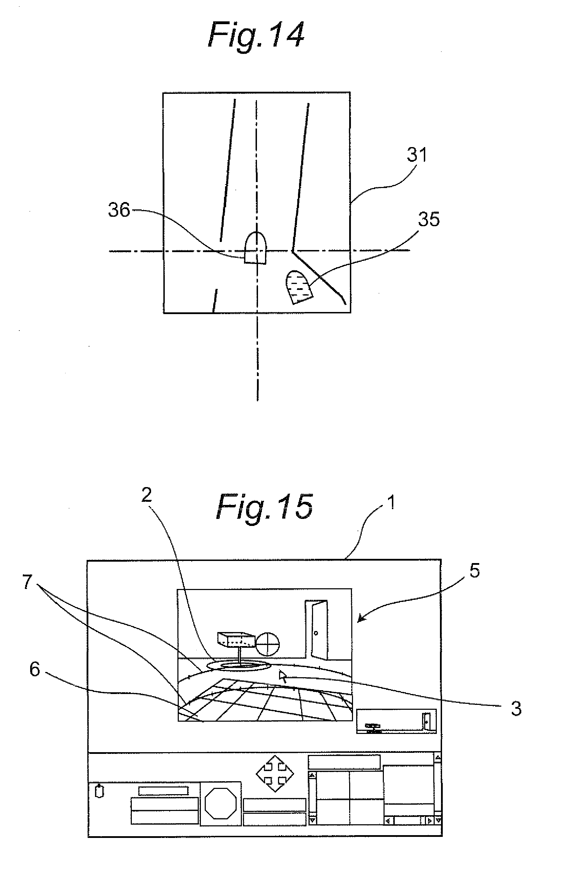

Fig. 15 is a view illustrating a monitor 1 of the remote control apparatus in the remote control system in Patent Literature 1. The moving apparatus (robot) in Patent Literature 1 transmits an image photographed by a camera of the moving apparatus to the remote control apparatus. The remote control apparatus displays the image received from the moving apparatus on the monitor 1 of the remote control apparatus shown in Fig. 15. As shown in Fig. 15, a floor plane grid 6 and a low-tension tape 7 are superimposed on an image 5 displayed on the monitor 1. The floor plane grid 6 shows a front plane of the moving apparatus using grids of a set dimension in order to provide a relative distance between an object in a camera view and the moving apparatus to a user. Further, the low-tension tape 7 indicates a relative angle of rotation of the moving apparatus with respect to the camera.

A manipulator of the remote control system understands a distance sense through the floor plane grid 6 and the low-tension tape 7, and moves a cursor 3 using a mouse or the like of the remote control apparatus so as to set a target position 2 on the image 5. As a result, position information about the target position 2 is transmitted from the remote control apparatus to the moving apparatus. The moving apparatus moves toward the target position 2 received from the remote control apparatus. In Patent Literature 1, the use of such a remote control system enables the manipulator to remotely manipulate the moving apparatus.

### CITATION LIST

### PATENT LITERATURE

Patent Literature 1: JP 2003-532218 W

### SUMMARY OF THE INVENTION

However, in the conventional remote control system, it is difficult for the manipulator to intuitively understand the target position 2 in a cubic space displayed on the monitor 1, and thus occasionally difficult to set a target position on the monitor 1. Concretely, in the conventional remote control system, it is difficult for the manipulator to intuitively understand a distance between a surrounding environment subject (wall or the like) and the target position in a cubic space displayed on the monitor 1, and thus occasionally difficult to set a target position on the monitor 1. Further, in the conventional remote control system, it is difficult for the manipulator to understand a position of the moving apparatus in a cubic surrounding environment on the image 5, and thus occasionally difficult to set an optimum target position.

An object of the present invention is to solve these problems and to provide a remote control system that can move the moving apparatus to a target position efficiently.

In order to solve the above problems, a remote control system according to one aspect of the present invention is a remote control system comprising a moving apparatus and a remote control apparatus, wherein
the remote control apparatus has a manipulating unit, a communicating unit that transmits a target position input by the manipulating unit to the moving apparatus, and a detecting unit that detects an input value of the manipulating unit as an amount of change, and
the moving apparatus has a storage unit that stores map information, a control unit that autonomously moves the moving apparatus to the target position along a moving path, and the control unit that autonomously moves the moving apparatus while changing the target position in accordance with the amount of change.

The present invention can provide the remote control system that can moves the moving apparatus to the target position efficiently.

### BRIEF DESCRIPTION OF THE DRAWINGS

These and other objects and features of the present invention will be apparent from the following description related to embodiments taken in conjunction with the accompanying drawings, in which:
Fig. 1 is a schematic view of a remote control system according to a first embodiment of the present invention;
Fig. 2A is a schematic explanatory view of a monitor and a manipulating unit at an operating time according to the first embodiment;
Fig. 2B is a schematic explanatory view of the monitor and the manipulating unit at an advancing manipulation time according to the first embodiment;
Fig. 2C is a schematic explanatory view of the monitor and the manipulating unit at a time of right turns manipulation according to the first embodiment;
Fig. 2D is a schematic explanatory view of the monitor and the manipulating unit at a time of right-hand rotation manipulation according to the first embodiment;
Fig. 3 is a flowchart illustrating a motion setting a target position through a remote control apparatus according to the first embodiment;
Fig. 4A is a view illustrating the monitor of the remote control apparatus in a first state according to the first embodiment;
Fig. 4B is a view illustrating the monitor of the remote control apparatus in a second state according to the first embodiment;
Fig. 4C is a view illustrating the monitor of the remote control apparatus in a third state according to the first embodiment;
Fig. 4D is a view illustrating the monitor of the remote control apparatus in a fourth state according to the first embodiment;
Fig. 5 is a view illustrating nodes of map information according to the first embodiment;
Fig. 6 is a view illustrating a second moving path of the remote control apparatus according to the first embodiment;
Fig. 7 is a view illustrating the second moving path of the remote control apparatus in which the setting of the target position is changed according to the first embodiment;
Fig. 8A is a flowchart illustrating a first half part of a series of a remote control flow of according to the first embodiment;
Fig. 8B is a flowchart illustrating a latter half part of the series of the remote control flow according to the first embodiment;
Fig. 9 is a schematic view illustrating a moving apparatus and its periphery according to the first embodiment;
Fig. 10 is a schematic view of the remote control apparatus according to a second embodiment of the present invention;
Fig. 11 is a view illustrating a relationship between a first icon and a wall image according to a second embodiment;
Fig. 12A is a schematic view of the remote control system according to a third embodiment of the present invention;
Fig. 12B is a view of an image viewed from above the moving apparatus on a monitor of the remote control apparatus according to the third embodiment;
Fig. 12C is a view of an image generated by superimposing an image obtained by an image forming unit of surrounding photographing units on map information on the monitor of the remote control apparatus according to the third embodiment;
Fig. 12D is a view of the monitor of the remote control apparatus according to a modified example of the third embodiment;
Fig. 13 is a view illustrating a monitor of a remote control unit according to the third embodiment;
Fig. 14 is a view illustrating a monitor of a remote control apparatus according to a fourth embodiment of the present invention; and
Fig. 15 is a view illustrating a monitor of a conventional remote control apparatus.

### DESCRIPTION OF THE EMBODIMENTS

Embodiments of the present invention are described below with reference to the drawings. The same components are denoted by the same reference symbols, and description thereof is occasionally omitted. Further, for easy understanding of the drawings, the respective components are independently and schematically illustrated.

### (First Embodiment)

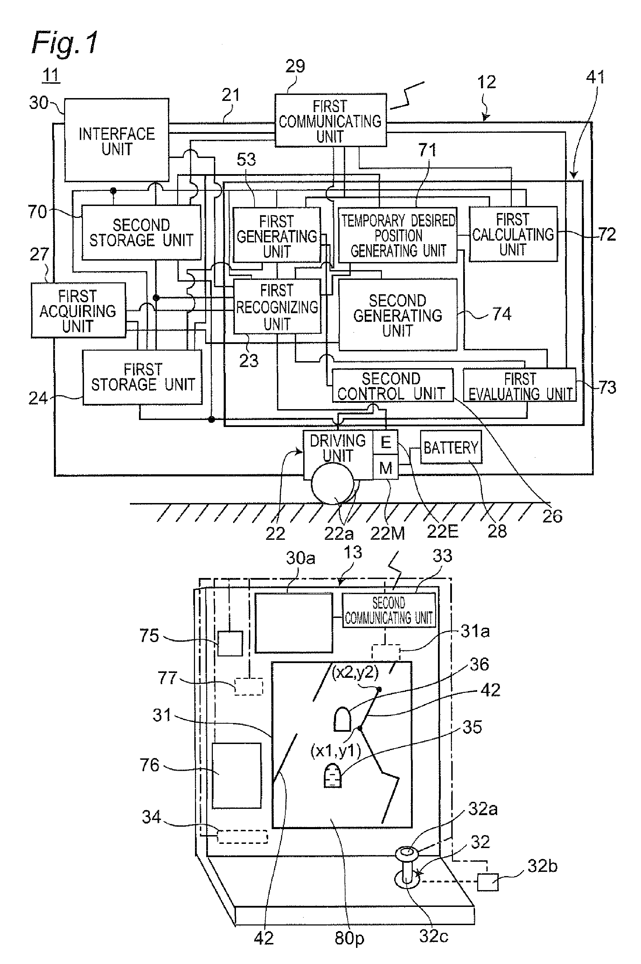

Fig. 1 is a schematic view of a remote control system 11 according to a first embodiment of the present invention. The remote control system 11 according to the first embodiment is constituted by at least a moving apparatus 12 and a remote control apparatus 13. The remote control system 11 according to the first embodiment is a system in which a moving apparatus 12 autonomously moves based on a target position from the remote control apparatus 13. A moving path (a first moving path, a second moving path) means a path that is generated by a first generating unit 53 so that the moving apparatus 12 autonomously moves. The first generating unit 53 generates the moving path while acquiring environment information about surrounding within a scope of up to a target position. The moving apparatus 12 drives a driving unit such as driving wheels 22a or legs along the moving path so as to autonomously move and track the target position.

As shown in Fig. 1, the moving apparatus 12 and the remote control apparatus 13 are connected by wireless communication, and transmit/receive various information. A manipulator of the remote control system 11 manipulates a manipulating unit 32 of the remote control apparatus 13 so as to set the target position of the moving apparatus 12. For example, the manipulator in a remote place moves a position of a first icon 36 displayed on a first monitor 31 of the remote control apparatus 13 using the manipulating unit 32 of the remote control apparatus 13 so as to set the target position. The first icon 36 is an icon indicating the target position on the first monitor 31. The remote control apparatus 13 wirelessly transmits the target position from a second communicating unit 33 to a first communicating unit 29 of the moving apparatus 12. When receiving the target position, the moving apparatus 12 recognizes a current position in map information stored in advance. In the present invention, the current position includes information about a current orientation of the moving apparatus 12 as well as information about the current position of the moving apparatus 12. Further, in the present invention, the target position includes information about a move target orientation of the moving apparatus 12 as well as information about the target position of the moving apparatus 12. The moving apparatus 12 that ends the recognition of the current position autonomously moves toward the target position set by the remote control apparatus 13.

In the following description, a first predetermined time is a time for which the second moving path is set by using nodes when the current position of the moving apparatus 12 does not change for this time or longer time. Further, a second predetermined time is a timing at which the moving apparatus 12 updates the moving path. Further, a third predetermined time is a timing of communication between the moving apparatus 12 and the remote control apparatus 13. Further, a fourth predetermined time is a time at which the manipulator of the remote control apparatus 13 is notified of a difficulty in arrival at the target position when this time or longer time passes with the target position and the current position of the moving apparatus 12 being separated by a sixth predetermined distance or longer, described later. Further, a first predetermined distance is a distance where the second moving path using nodes is set when a distance ΔD (or ΔE), described later, is the first predetermined distance or more. Further, a second predetermined distance is a distance to be notified to the manipulator of the remote control apparatus 13 as the distance ΔD (or ΔE), described later, that is too long. Further, a third predetermined distance is a distance set around the target position for deciding the arrival of the moving apparatus 12 at the target position. Further, a fourth predetermined distance is a distance ΔD for returning from the second moving path using nodes to the normal first moving path. Further, a fifth predetermined distance is a distance where an object that moves by this distance or more is regarded as a move obstacle as a result of sensing by a first acquiring unit 27. Further, the sixth predetermined distance is a distance for notifying the manipulator of the remote control apparatus 13 of a difficulty in the arrival at the target position when the fourth predetermined time or more passes in this distance or more. Further, a seventh predetermined distance is a distance where the sensing of the first acquiring unit 27 is enabled. Further, the first moving path is a moving path for normal move of the moving apparatus 12, and a shortest path between the current position and the target position of the moving apparatus 12. Further, the second moving path is a moving path of the moving apparatus 12 passing through a path for connecting nodes, and a moving path as a countermeasure for a case where move using the first moving path is not enabled.

First, components of the moving apparatus 12 are described.

The moving apparatus 12 includes a vehicle body 21, a driving unit 22, a first storage unit 24, the first acquiring unit 27, a battery 28, the first communicating unit 29, an interface unit 30, a second storage unit 70, and a first control unit 41. The first storage unit 24 is a move information storage unit storing move information of the moving apparatus 12. The second storage unit 70 is a map information storage unit storing map information. The first acquiring unit 27 is an environment information acquiring unit acquiring environment information around the moving apparatus 12 using a sensor.

The first control unit 41 includes a first recognizing unit 23, a second control unit 26, the first generating unit 53, a second generating unit 74, a temporary target position generating unit 71, a first calculating unit 72, and a first evaluating unit 73. The first recognizing unit 23 is a self position recognizing unit recognizing the position of the moving apparatus 12. The second control unit 26 is a running control unit controlling run of the moving apparatus 12. The first generating unit 53 is a path generating unit generating a moving path on which the moving apparatus 12 runs. The second generating unit 74 is an obstacle avoiding point generating unit generating an obstacle avoiding point. The temporary target position generating unit 71 generates a temporary target position for the run of the moving apparatus 12 on the moving path at a predetermined cycle based on the moving path, the current position and the target position. That is to say, in order that the moving apparatus 12 moves along the moving path, the temporary target position generating unit 71 sets target positions on the moving path temporarily and sequentially so that the moving apparatus 12 moves toward the target positions sequentially. The first evaluating unit 73 is a move amount evaluating unit detecting amounts of change between the target position and the current position, and then, evaluating a move amount of the moving apparatus 12. The first calculating unit 72 is a distance calculating unit calculating a distance between the target position and the current position of the moving apparatus 12.

Processes and motions of the moving apparatus 12 according to the first embodiment are controlled by the first control unit 41 or the like. Concretely, a correcting or comparing process and the move motion of the moving apparatus 12 according to the first embodiment are controlled by using a suitable combination of the first recognizing unit 23, the first storage unit 24, the second control unit 26, the first acquiring unit 27, the first communicating unit 29, the first generating unit 53, the second storage unit 70, the second generating unit 74, and the first evaluating unit 73.

The driving unit 22 includes a pair of motors 22M that are rotated normally and reversely by the battery 28, and a pair of driving wheels 22a that are rotated normally and reversely by the pair of motors 22M independently. The paired motors 22M are provided with encoders 22E measuring rotational numbers and rotational velocities. The second control unit 26 detects a move distance and a move direction of the moving apparatus 12 based on outputs from the paired encoders 22E. The numbers of the motors 22M and the encoders 22E are one example, and may be any numbers. The velocity of the moving apparatus 12 is not constant, and can be suitably changed. A maximum velocity of the moving apparatus 12 is set in advance.

The second storage unit 70 stores map information in advance. The map information includes also environment information about environmental objects. The environment information about surrounding environmental objects are information about a building structure where the moving apparatus 12 runs, such as information about passages 80P, walls 42, or staircases of the buildings. A region around the down staircase where a risk of an accident due to a fall of the moving apparatus 12 exists is set as a forbidden region of the moving apparatus 12 in the map information from a viewpoint of safety. Further, the map information includes, as the environment information, nodes 45 (position coordinates) arranged on the passage 80P where the moving apparatus 12 can move at suitable intervals, and information about a connecting relationship of the nodes 45. The environment information included in the map information according to the first embodiment includes information in which both ends of a move forbidden line segment is represented by absolute coordinates (x₁, y₁), (x₂, y₂) in order that line segments representing boundaries of an environment object and the forbidden region are displayed as the move forbidden line segments. For example, a wall surface of the wall 42 as one example of the environment information displayed on the first monitor 31 of the remote control apparatus 13 is recorded as a move forbidden line segment in the map information. The environmental object or the forbidden region having a constant region is constituted by combining the move forbidden line segments so as to surround the region. The generation of the moving path of the moving apparatus 12 can use a method disclosed in, for example, Japanese Patent No. 3844247. Further, the target position set by the remote control apparatus 13 is stored as an absolute coordinate in the first storage unit 24, and the environment information acquired by the first acquiring unit 27 is stored therein.

The first acquiring unit 27 acquires, as environment information using a sensor, the wall 42 or an obstacle on the passage 80P where the moving apparatus 12 moves. This sensor can be composed of a lidar (Light Detection And Ranging) as an example. In this case, the lidar is provided to a lower front center of the vehicle body 21 in order to detect an environmental object around the moving apparatus 12, and scans a front side of the running direction of the moving apparatus 12. The Lidar shakes a laser beam in a scanning plane and acquires a distance between the moving apparatus 12 and a surrounding environmental object. In the first embodiment, the first acquiring unit 27 performs a scan intermittently at a constant cycle, and stores a set of distance data acquired at each scan as environment information at each time point in the first storage unit 24 in time series. The first acquiring unit 27 can use an ultrasonic sensor or the like as another example of the lidar (also known as laser radar). The first acquiring unit 27 is connected to the first storage unit 24. When an obstacle is detected by the first acquiring unit 27, the move of the moving apparatus 12 can be stopped. The first communicating unit 29 is a radio communicating unit, and transmits/receives various information to/from the remote control apparatus 13. The first communicating unit 29 is connected to the second storage unit 70, the first recognizing unit 23, and the interface unit 30.

The interface unit 30 has a touch panel, a camera, a microphone and a speaker as an example. The interface unit 30 is an apparatus for various settings of the moving apparatus 12, and assists communication between the manipulator of the remote control apparatus 13 and a person near the moving apparatus 12. Image information or voice information acquired through the camera or the microphone of the interface unit 30 is transmitted to the remote control apparatus 13 via the communicating units 29 and 33. Further, the image information or the voice information transmitted from the remote control apparatus 13 is output from the interface unit 30 via the communicating units 33 and 29.

The first recognizing unit 23 of the first control unit 41 is first taught the current position of the moving apparatus 12 as an initial value through input from a person via the interface unit 30 or recognition by the first acquiring unit 27, and recognizes the current position (self position) of the moving apparatus 12. Thereafter, the first evaluating unit 73 detects an amount of change from the initial value of the moving apparatus 12 first recognized based on the output from the encoders 22E of the driving unit 22, and the first recognizing unit 23 recognizes the current position of the moving apparatus 12 in the absolute coordinate. Only the recognition through the output from the encoders 22E might cause an error between an actual position and the current position of the moving apparatus 12 due to, for example, skidding of the driving wheels 22a. Therefore, in the first embodiment, a shape of wall of building is recognized from the environment information acquired by the first acquiring unit 27, and information about the wall 42 of the building that is recognized by the first recognizing unit 23 and is stored in the first storage unit 24 is compared with information about the wall of the building included in the map information in the second storage unit 70. Besides the recognition through the output from the encoders 22E, the self position can be recognized more accurately by correction of the current position in the absolute coordinate based on the compared result. The first recognizing unit 23 is connected to the interface unit 30, the first acquiring unit 27, the first storage unit 24, the second storage unit 70, the first evaluating unit 73, and the encoders 22E. The information about the current position recognized by the first recognizing unit 23 is transmitted to the second communicating unit 33 via the first communicating unit 29 at every third predetermined time (for example, every ms second).

The first generating unit 53 of the first control unit 41 connects a plurality of nodes included in the map information of the second storage unit 70 so as to form a node connected path, and generates the moving path of from the current position to the target position. The target position is set as the absolute coordinate in the first storage unit 24, and is input from the first storage unit 24 into the first generating unit 53. The first generating unit 53 is connected to the first storage unit 24 and the second control unit 26.

The second control unit 26 controls the pair of motors 22M of the driving unit 22 based on the moving path generated by the first generating unit 53 and the output from the encoders 22E so as to autonomously move the moving apparatus 12 toward the target position. The second control unit 26 is connected to the motors 22M and the encoders 22E.

The first calculating unit 72 of the first control unit 41 is connected to the first storage unit 24 and the first recognizing unit 23, and calculates the distance ΔD between the target position and the current position. The first evaluating unit 73 of the first control unit 41 detects the amount of change that is an input value detected by a first detecting unit 32b of the manipulating unit 32, as the amount of change in the manipulating unit 32, and outputs the detected amount of change to the first recognizing unit 23 and the first storage unit 24. The first detecting unit 32b is an input detector detecting an input value based on a manipulating amount of the manipulating unit 32. The second generating unit 74 of the first control unit 41 generates an obstacle avoiding point on the outside of the moving path, and generates an avoiding path of the moving apparatus 12. The avoiding path means a path where the moving apparatus 12 that is running on the moving path temporarily deviates from the moving path to run in order to avoid an obstacle.

According to the above constitution while avoiding a collision with a surrounding environmental object or an obstacle based on the environment information acquired by the first acquiring unit 27, the moving apparatus 12 runs on the passage 80P toward the target position set as the absolute coordinate in the first storage unit 24 under control by the second control unit 26. That is to say, the moving apparatus 12 has a function that automatically avoids the environmental object or the obstacle detected by the first acquiring unit 27 so as to move to the target position. In the moving apparatus 12, when the obstacle is detected in the running direction of the moving apparatus 12 based on the environment information acquired by the first acquiring unit 27, the second generating unit 74 generates an obstacle avoiding point. Thereafter, the moving apparatus 12 runs toward the obstacle avoiding point generated by the second generating unit 74, so that the moving apparatus 12 deviates from the moving path to run, and avoids the obstacle. After the avoidance, the moving apparatus 12 returns to the moving path before the avoidance, and moves toward the target position.

Next, components of the remote control apparatus 13 are described.

The remote control apparatus 13 includes the first monitor 31, a second monitor 30a, a third storage unit 34, the manipulating unit 32, a second calculating unit 77, the second communicating unit 33, and a notifying unit 75. The second monitor 30a is a communication monitor for communication with a person near the moving apparatus 12. The manipulating unit 32 has, for example, a joystick 32c.

The second calculating unit 77 is a calculator making a calculation such that by adding the input value of the manipulation detected by the first detecting unit 32b to the target position stored in the third storage unit 34, the target position is change into new one.

The first monitor 31 is, for example, a liquid crystal display device. The first monitor 31 displays an image obtained by superimposing an image of a second icon 35 and an image of the first icon 36 on an image of map information around the moving apparatus 12 through an image forming unit 31a of the first monitor 31. The second icon 35 is a moving apparatus icon representing the current position of the moving apparatus 12. The first icon 36 is a target position icon representing the target position of the moving apparatus 12. The second monitor 30a is, for example, a liquid crystal display device. The second monitor 30a displays an image which is acquired by the interface unit 30 of the moving apparatus 12 and transmitted via the communicating units 29 and 33. The use of the second monitor 30a enables the manipulator of the remote control apparatus 13 to communicate with a person around the moving apparatus 12 using an image or a video while the manipulator exists in a remote place.

The third storage unit 34 transmits/receives information by means of wireless communication via the communicating units 29 and 33 so as to share the information with the first storage unit 24 of the moving apparatus 12. That is to say, when the target position is stored in the third storage unit 34, the target position is stored also in the first storage unit 24 of the moving apparatus 12 by the transmission/reception via the communicating units 33 and 29. Further, when the current position of the moving apparatus 12 is stored in the first storage unit 24 of the moving apparatus 12, the current position is stored also in the third storage unit 34 by the transmission/reception via the communicating units 29 and 33.

The manipulating unit 32 is one example of the manipulating unit changing the target position stored in the first storage unit 24 by means of the communication via the communicating units 33 and 29. The manipulating unit 32 first detects the input value based on the manipulation of the joystick 32c from the manipulator of the remote control apparatus 13 as an amount of change through the first detecting unit 32b of the manipulating unit 32. The target position is changed by the second calculating unit 77 in accordance with the detected amount of change, and the target position changed via the communicating units 33 and 29 is transmitted. Accordingly, the target position stored in the first storage unit 24 is changed.

Further, the joystick 32c is provided with a button 32a. In the first embodiment, the manipulator can instruct the first storage unit 24 through pressing the button 32a so that the target position is reset via the communicating units 33 and 29 and the target position is set as the current position.

For example, when the distance ΔD is less than the third predetermined distance, described later and the moving apparatus 12 reaches the preset distance of the target position, for example, the notifying unit 75 notifies the manipulator of the remote control apparatus 13 through voice or image display. As examples of the notification through the notifying unit 75, a motion resistance of the manipulating unit 32 is increased (a resistance force is allowed to act on the joystick 32c by the motor), a sound is made, light is emitted, and the display resetting the target position to the current position is performed. Besides the above example of the notification, the notifying unit 75 notifies that the moving apparatus 12 is moving on the second moving path, described later.

The second communicating unit 33 is a wireless communicator, and transmits/receives various information to/from the first communicating unit 29 of the moving apparatus 12. The second communicating unit 33 is connected to the first monitor 31, the second monitor 30a, the third storage unit 34, and the manipulating unit 32.

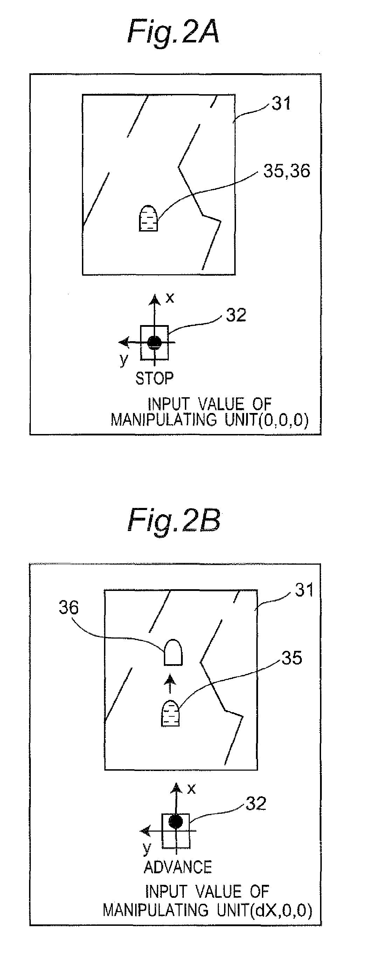

Next, examples of the remote manipulation on the moving apparatus 12 by means of the remote control system 11 are described below with reference to Fig. 2A to Fig. 2D.

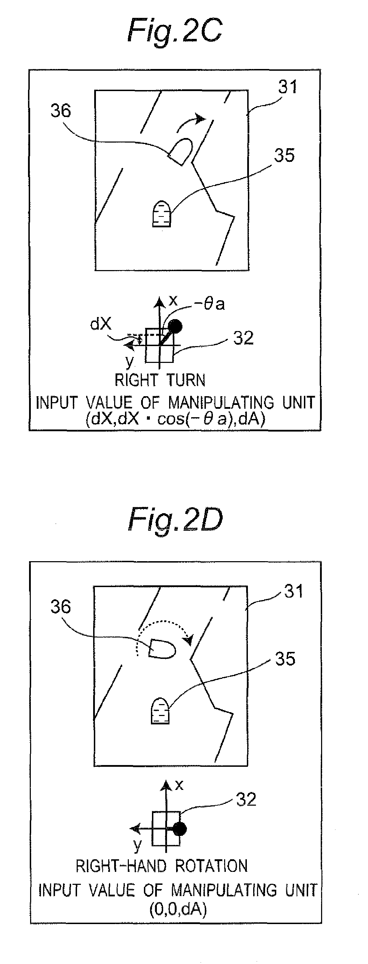

Fig. 2A is a schematic explanatory view illustrating the first monitor 31 and the manipulating unit 32 of the remote control apparatus 13 at a time when the moving apparatus 12 according to the first embodiment starts to operate. Fig. 2B is a schematic explanatory view illustrating the first monitor 31 and the manipulating unit 32 of the remote control apparatus 13 at a time of an advancing manipulation according to the first embodiment. Fig. 2C is a schematic explanatory view illustrating the first monitor 31 and the manipulating unit 32 of the remote control apparatus 13 at a time of a right turn manipulation according to the first embodiment. Fig. 2D is a schematic explanatory view illustrating the first monitor 31 and the manipulating unit 32 of the remote control apparatus 13 at a time of a right-hand rotation according to the first embodiment.

First, the remote manipulation using the remote control apparatus 13 at the time when the moving apparatus 12 according to the first embodiment operates is described with reference to Fig. 2A.

As shown in Fig. 2A, when the moving apparatus 12 is powered on to be started, the first control unit 41 of the moving apparatus 12 substitutes the current position (Xa, Ya, Aa) of the moving apparatus 12 into the target position (Xt, Yt, At) of the moving apparatus 12 so as to set the resulted value as an initial value. A position (Xt, Yt) is an absolute coordinate of an x axis and a y axis in the map information about the target position, and a position (Xa, Ya) is an absolute coordinate of an x axis and a y axis in the map information about the current position. The x axis represents an advancing direction of the moving apparatus 12, and the y axis represents a direction perpendicular to the advancing direction of the moving apparatus 12. Further, an orientation (At) represents an angle (move target orientation) formed between the x axis and a direction of the moving apparatus 12 on the target position, and is information included in the target position. Further, an orientation (Aa) represents an angle (current orientation) formed between the x axis and the direction of the moving apparatus 12 on the current position, and is information included in the current position. At the motion starting time of the moving apparatus 12, the current position matches with the target position. Further, at the motion starting time, the moving apparatus 12 is in a stopped state, and the image forming unit 31a superposes the second icon 35 and the first icon 36 to display the second icon 35 and the first icon 36 on the first monitor 31. Further, in a case of Fig. 2A, since the manipulator does not manipulate the manipulating unit 32, an input value of the manipulating unit 32 is (0, 0, 0). That is to say, in the case of Fig. 2A, the manipulation of the manipulating unit 32 is "stop".

Subsequently, the remote manipulation at the time when the moving apparatus 12 according to the first embodiment advances is described below with reference to Fig. 2B. In the case of Fig. 2B, the manipulation of the manipulating unit 32 is "advancing".

As shown in Fig. 2B, when the joystick 32c is titled forward (x axial direction) by the manipulator in order to perform the advancing manipulation of the moving apparatus 12, the first detecting unit 32b of the remote control apparatus 13 detects the input value (dX, 0, 0) of the manipulating unit 32. As a result, the first icon 36 is displayed in a position separated from the second icon 35 by a distance corresponding to the input value (dX, 0, 0) on the first monitor 31 based on the input value (dX, 0, 0) detected by the first detecting unit 32b. The second calculating unit 77 of the remote control apparatus 13 adds the input value to the target position stored in the third storage unit 34 so as to change the target position into a new target position (Xt', Yt', At'). That is to say, the calculation is made such that the new target position (Xt', Yt', At') = target position (Xt, Yt, At) + the input value (dX, 0, 0), and then the target position is changed.

After the initial value of the moving apparatus 12 is set, the position of the first icon 36 is a position separated from the second icon 35 to the running direction of the moving apparatus 12 by the distance dX (see Fig. 2B). When the new target position transmitted from the second communicating unit 33 of the remote control apparatus 13 is received by the first communicating unit 29, the moving apparatus 12 starts to autonomously move toward the new target position based on the control of the first control unit 41. In the case shown in Fig. 2B, the moving apparatus 12 moves straight to the advancing direction of the moving apparatus 12 in which the first icon 36 is set.

Subsequently, the remote manipulation of the moving apparatus 12 at the time of the right turn manipulation in the first embodiment is then described with reference to Fig. 2C. In the case of Fig. 2C, the manipulation of the manipulating unit 32 is "right turn".

As shown in Fig. 2C, when the joystick 32c is tilted diagonally forward right by the manipulator in order to perform the right turn manipulation of the moving apparatus 12 (tilted between a plus direction of the x axis (an up direction in Fig. 2C) and a minus direction of the y axis (a right direction in Fig. 2C)), the first detecting unit 32b of the manipulating unit 32 in the remote control apparatus 13 detects an input value (dX, dX•cos(-θa), dA) of the manipulating unit 32, and the first icon 36 is displayed in a position separated from the second icon 35 on the first monitor 31 based on the input value. Symbol θa represents an angle formed by the x axis and the joystick 32c. The second calculating unit 77 of the remote control apparatus 13 adds the input value to the target position stored in the third storage unit 34 so as to calculate a new target position. That is to say, in the case of Fig. 2C, the new target position (Xt', Yt', At') = target position (Xt, Yt, At) + the input value (dXt, dXt•cos (-θa), dAt). The first communicating unit 29 of the moving apparatus 12 receives the new target position from the second communicating unit 33 of the remote control apparatus 13. The moving apparatus 12 starts to autonomously move toward the new target position. In the case of Fig. 2C, the moving apparatus 12 advances in a right curve, and autonomously moves until the current position of the moving apparatus 12 matches with the new target position.

Subsequently, the remote manipulation of the moving apparatus 12 at the time of the right-hand rotation manipulation in the first embodiment is then described with reference to Fig. 2D. In a case of Fig. 2D, the manipulation of the manipulating unit 32 is "right-hand rotation".

As shown in Fig. 2D, when the joystick 32c is tilted right by the manipulator in order to perform the right-hand rotating manipulation on the moving apparatus 12 (tilted to a minus direction of the y axis), the first detecting unit 32b of the manipulating unit 32 in the remote control apparatus 13 detects the input value (0, 0, dA) of the manipulating unit 32. The second calculating unit 77 of the remote control apparatus 13 adds the input value to the target position so as to calculate a new target position. That is to say, in the case of Fig. 2D, the new target position (Xt', Yt', At') = the target position (Xt, Yt, At) + the input value (0, 0, dAt). In the case of Fig. 2D, the first icon 36 on the first monitor 31 of the remote control apparatus 13 rotates to the right (right-hand rotation). As a result, the first communicating unit 29 of the moving apparatus 12 receives the new target position from the second communicating unit 33 of the remote control apparatus 13. The moving apparatus 12 starts to move toward the new target position.

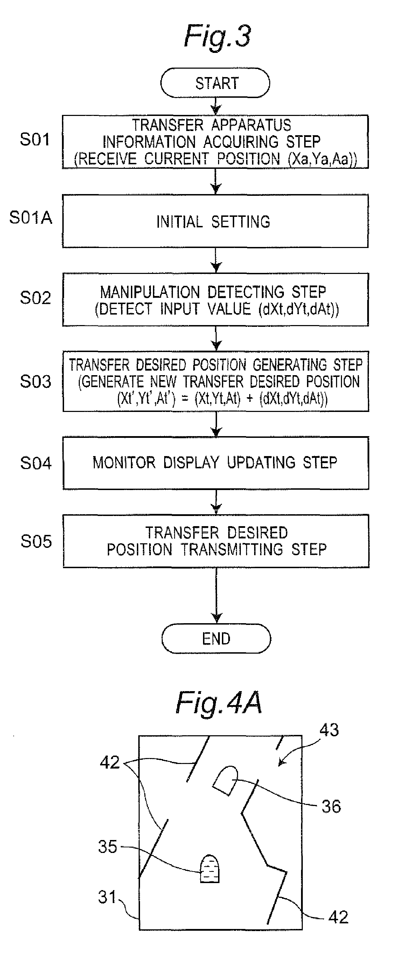

Next, a flow of a setting motion for target position by means of the remote control apparatus 13 is described with reference to Fig. 3.

Fig. 3 is a flowchart illustrating the motion setting the target position by the remote control apparatus 13 according to the first embodiment.

First, the second calculating unit 77 of the remote control apparatus 13 acquires the current position of the moving apparatus 12 from the first recognizing unit 23 of the moving apparatus 12 via the communicating units 29 and 33 at step S01. Concretely, the second communicating unit 33 of the remote control apparatus 13 receives the current position (Xa, Ya, Aa) of the moving apparatus 12 from the first recognizing unit 23 of the moving apparatus 12 via the first communicating unit 29. Step S01 is a moving apparatus information acquiring step at which the information about the moving apparatus 12 is acquired.

Subsequently, at step S01A, the current position (Xa, Ya, Aa) of the moving apparatus 12 is substituted into the target position (Xt, Yt, At) of the moving apparatus 12 by the first control unit 41 to set the resulted value as an initial value. Step S01A is an initial value setting step only at a time when the initial value of the moving apparatus 12 is set.

Subsequently, at step S02, the input value of the manipulating unit 32 is detected by the first detecting unit 32b. Concretely, the first detecting unit 32b detects the tilt of the joystick 32c as the input value (dXt, dYt, dAt) obtained by the manipulator's manipulation of the joystick 32c. Step S02 is a manipulation detecting step of detecting an input value through the manipulation of the manipulating unit 32.

Subsequently, at step S03, the second calculating unit 77 adds the input value detected by the first detecting unit 32b at the input step S02 to the target position so as to generate a new target position. That is to say, the new target position (Xt', Yt', At') = the target position (Xt, Yt, At) + the input value (dXt, dYt, dAt). Step S03 is a target position generating step of generating the new target position based on the manipulation of the manipulating unit 32.

Subsequently, at step S04, in the remote control apparatus 13, the position of the first icon 36 on the first monitor 31 is updated by the image forming unit 31a in accordance with the new target position generated by the second calculating unit 77 at step S03. Further, the display of the second icon 35 on the first monitor 31 is updated by the image forming unit 31a in accordance with the current position of the moving apparatus 12 acquired at step S01. Step S04 is a monitor display updating step of updating the display of the first monitor 31 on the remote control apparatus 13.

Subsequently, at step S05, the target position generated by the second calculating unit 77 at step S03 is transmitted from the second communicating unit 33 to the first communicating unit 29 of the moving apparatus 12 so as to be stored in the first storage unit 24. Step S05 is a target position transmitting step of transmitting the target position from the remote control apparatus 13 to the moving apparatus 12.

When step S01 to step S05 in Fig. 3 are repeated, the target position is changed by the manipulation applied onto the manipulating unit 32 of the remote control apparatus 13, and the target position in the first storage unit 24 of the moving apparatus 12 is set. When the first communicating unit 29 receives the target position from the second communicating unit 33 of the remote control apparatus 13, the moving apparatus 12 updates the received target position as the new target position in the first storage unit 24, and starts to autonomously move toward the updated target position.

Next, generation of the second moving path using nodes according to the first embodiment is described.

In the remote control system 11 according to the first embodiment, the first generating unit 53 generates the second moving path including a path connecting the nodes, by using the nodes 45 included in the map information under conditions that a distance (interval) ΔD between the current position and the target position of the moving apparatus 12 is the first predetermined distance or more, or the current position does not change for the first predetermined time or more.

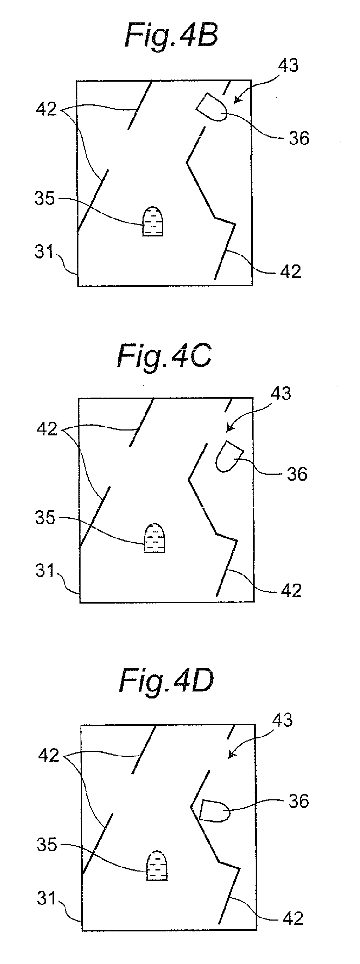

The generation of the second moving path using the nodes in the first generating unit 53 is described with reference to Fig. 4A to Fig. 4D, Fig. 5, Fig. 6, and Fig. 7.

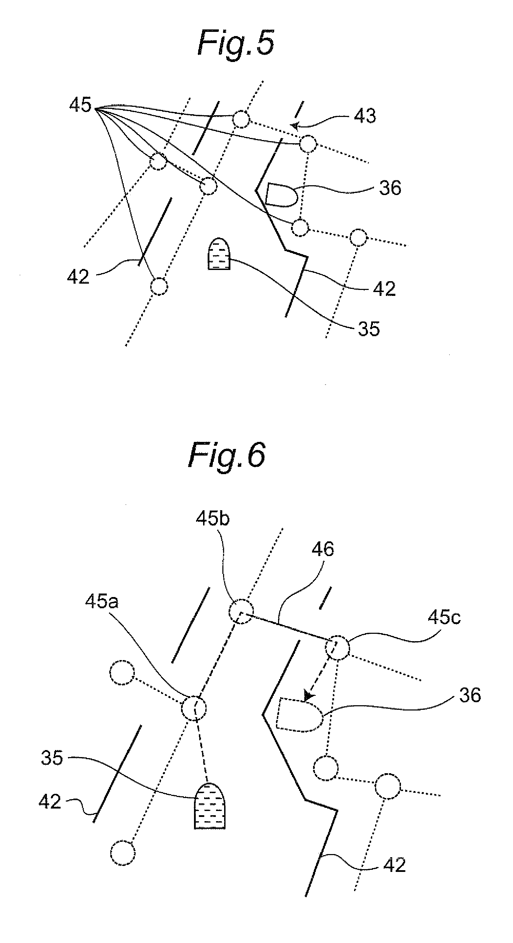

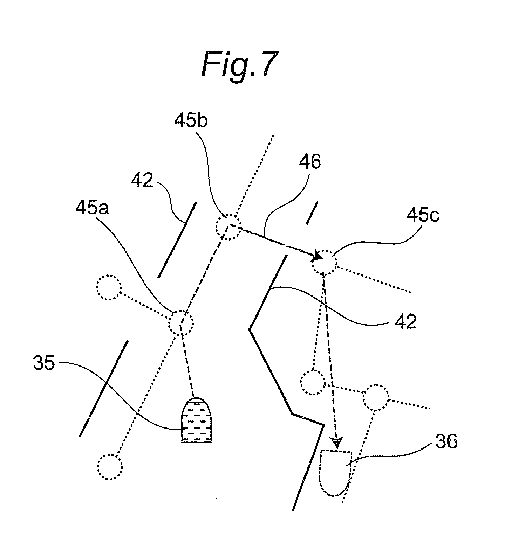

Fig. 4A to Fig. 4D are views illustrating the first monitor 31 of the remote control apparatus 13 in the respective states according to the first embodiment. Fig. 5 is a view illustrating the nodes 45 of the map information according to the first embodiment. Fig. 6 is a view illustrating the second moving path of the remote control apparatus 13 according to the first embodiment. Fig. 7 is a view illustrating the second moving path of the remote control apparatus 13 in which the setting of the target position is changed according to the first embodiment.

As shown in a series of the flow of Fig. 4A to Fig. 4D, even when the first icon 36 is moved on the first monitor 31 by the manipulating unit 32, the second icon 35 does not move but only the first icon 36 moves in some cases. This is caused because in the first embodiment, even when the motion autonomously avoiding an obstacle around the moving apparatus 12 is performed on the moving apparatus 12, the second icon 35 on the first monitor 31 is displayed with the second icon 35 not moving. In this case, as shown in Fig. 4A to Fig. 4C, when only the first icon 36 moves on the first monitor 31, the wall 42 as one example of the obstacle is occasionally held between the first icon 36 and the second icon 35 as shown in Fig. 4D. In the case where the obstacle such as the wall 42 is held between the target position (the first icon 36) and the current position (the second icon 35), even when the moving apparatus 12 autonomously moves along the first moving path generated by the first generating unit 53, the moving apparatus 12 cannot occasionally arrives at the target position. This is because the first generating unit 53 according to the first embodiment generates the first moving path (namely, the first moving path that passes through the obstacle such as the wall 42) of a shortest distance from the current position to the target position. The first moving path is a shortest moving path generated by the first generating unit 53 in order to connect the current position and the target position of the moving apparatus 12. In this case, when the moving apparatus 12 runs along the generated first moving path, the moving apparatus 12 repeats the avoiding motion in front of the wall 42, and occasionally cannot further run along the first moving path.

Therefore, in the moving apparatus 12 according to the first embodiment, in such a case, not the first moving path that passes through the obstacle but the second moving path that passes through an opening 43 by using the node 45 is searched, as described below.

When an interval (distance) between the opening 43 of the wall 42 and the moving apparatus 12 is shorter than the seventh predetermined distance, the opening 43 is searched by the first acquiring unit 27 so that the first moving path that passes through the opening 43 can be set in some cases. However, when the interval (distance) between the opening 43 of the wall 42 and the moving apparatus 12 is the seventh predetermined distance or more, it is difficult to search the opening 43 by the first acquiring unit 27. The seventh predetermined distance here is a distance where the first acquiring unit 27 can acquire the environment information, and is acquired based on a sensor type of the first acquiring unit 27 and experiment data in advance.

In the moving apparatus 12 according to the first embodiment, in order to set the second moving path using the node 45, when the first recognizing unit 23 determines that the distance ΔD between the current position and the target position is the first predetermined distance or more, or a timer embedded in the first recognizing unit 23 determines that the current position does not change and only the first predetermined time (for example, 30 seconds) passes, the first generating unit 53 generates the second moving path including the path connecting the nodes by using the nodes 45 included in the map information and their connecting relationship. The node 45 is set on at least a corner and a cross point on the passage 80P stored in the second storage unit 70, and is set at suitable intervals on a straight line portion of the passage. When the second moving path using the nodes 45 is generated, the moving apparatus 12 according to the first embodiment autonomously moves from the current position to the target position along the second moving path generated by the first generating unit 53.

In such a manner, in the moving apparatus 12 according to the first embodiment, when the distance ΔD between the current position and the target position is separated by the first predetermined distance or more, or the current position does not change and the first predetermined time or more passes, the first generating unit 53 generates the second moving path using the nodes 45 included in the map information and the connecting relationship. As a result, the moving apparatus 12 can autonomously move to the target position more securely.

Next, the method generating the second moving path by the first generating unit 53 using the nodes 45 and the connecting relationship included in the map information is described in detail.

Fig. 5 is a view illustrating the nodes 45 in the map information and the connecting relationship according to the first embodiment. Fig. 6 is a view illustrating the second moving path 46 on the map on the first monitor 31 of the remote control apparatus 13 according to the first embodiment.

A coordinate of each node 45 and the connecting relationship of the nodes 45 are preset as the map information in the first storage unit 24. The information about the connecting relationship between the nodes 45 is, for example, information about whether a path between the nodes 45 is one-way or two-way, or information about a cost necessary for running between the nodes 45. The cost is evaluation values of distance, time and energy, and an indicator where needs for the move of the moving apparatus 12 are gathered. The first generating unit 53 selects the node 45 with which the cost from the current position is the smallest, as "a start point node" that is the node 45 for the first arrival from the current position. Further, the first generating unit 53 selects the node 45 with which the cost to the target position is the smallest, as "an end point node" that is the last node 45 toward the target position. The first generating unit 53 searches for the second moving path connecting middle nodes (the nodes 45 between the start point node and the end point node) with a minimum cost based on the selected start point node and end point node. As an algorithm to be used for the search for the second moving path by the first generating unit 53, for example, a path search algorithm A* can be used. With the path search algorithm A*, the second moving path is searched by the first generating unit 53, while a cost f(N) for the node 45 set in the running region of the moving apparatus 12 is being calculated. The cost f (N) is an estimated value of a minimum cost (for example, the shortest distance) for the path from the start point node to the end point node via the middle nodes, and is calculated by f(N) = g(N) + h(N). Symbol g(N) represents a minimum cost between the start point node and the middle node at the current time. Symbol h(N) represents an estimated value of a minimum cost between the middle node and the end point node. In such a manner, the first generating unit 53 generates an optimum second moving path where the total cost is minimum as the path from the start point node to the end point node. Such an optimum second moving path may be searched by the first generating unit 53 in accordance with not the path search algorithm A* but a path search method such as a genetic algorithm.

When the wall 42 exists between the current position and the target position in the state shown in Fig. 5, the first generating unit 53 according to the first embodiment generates the second moving path 46 between the current position and the target position of the moving apparatus 12 as a plurality of straight lines that pass through the nodes 45 in a bend as shown in Fig. 6. As to the moving path 46 in Fig. 6, a start point node 45a, a middle node 45b, and an end point node 45c are selected in this order as the nodes 45 to be passed through, and a bent line connecting the nodes 45a, 45b, and 45c is determined as the moving path 46. That is to say, the moving apparatus 12 according to the first embodiment moves toward the target position along the second moving path 46 connecting the nodes 45 as shown in Fig. 5.

Even when the environmental object such as the wall 42 exists between the current position and the target position of the moving apparatus 12, the moving apparatus 12 of the remote control system 11 according to the first embodiment can move from the current position to the target position. As a result, the manipulator uses the remote control apparatus 13 according to the first embodiment so as to be capable of remotely manipulating the moving apparatus 12 without regard to the environment around the moving apparatus 12.

In the remote control system 11 according to the first embodiment, the target position can changed after the moving apparatus 12 starts to run along the second moving path 46 connecting the nodes 45.

Fig. 7 is a view illustrating the second moving path 46 on the first monitor 31 of the remote control apparatus 13 in which the setting of the target position is changed after the start of the run according to the first embodiment.

As shown in Fig. 7, when the moving apparatus 12 moves along the moving path 46, since the target position is separated from the current position, the moving apparatus 12 occasionally takes a longer time to reach the target position. Therefore, in the moving apparatus 12 according to the first embodiment, when the second moving path 46 connecting the nodes 45a, 45b, and 45c is set by the first generating unit 53, the second moving path 46 up to the end point node 45c is set and fixed by the first generating unit 53. That is to say, even when the target position is moved as shown in Fig. 7, the second moving path 46 is not changed by the first generating unit 53 until the moving apparatus 12 arrives at the end point node 45c, and the second moving path 46 is changed by the first generating unit 53 so that the moving apparatus 12 according to the first embodiment moves toward the latest target position after arriving at the end point node 45c. As a result, every time the target position is set, the second moving path 46 that has been generated is not again generated by the first generating unit 53. Thus, an arithmetic load on the first generating unit 53 to generate the second moving path 46 can be reduced.

In some circumstances, however, when the moving apparatus 12 moves to the end point node 45c on the second moving path 46 at the time of changing target position, the second moving path 46 whose efficiency is enough low to generate the movement to a direction opposite to the target position is generated. As a countermeasure against this problem, a method updating the moving path 46 by the first generating unit 53 at every second predetermined time (for example, 10 seconds), or a method updating the second moving path 46 by the first generating unit 53 at every time of arrival at the node 45 on the moving path are considered. Further, when the first acquiring unit 27 can detect that the condition between the target position and the current position is changed in such a manner that an arrangement state of the environmental object around the moving apparatus 12 changes by the fifth predetermined distance or more, the moving path may be changed from the move along the second moving path 46 into the second moving path directly toward the target position based on the detection information from the first acquiring unit 27.

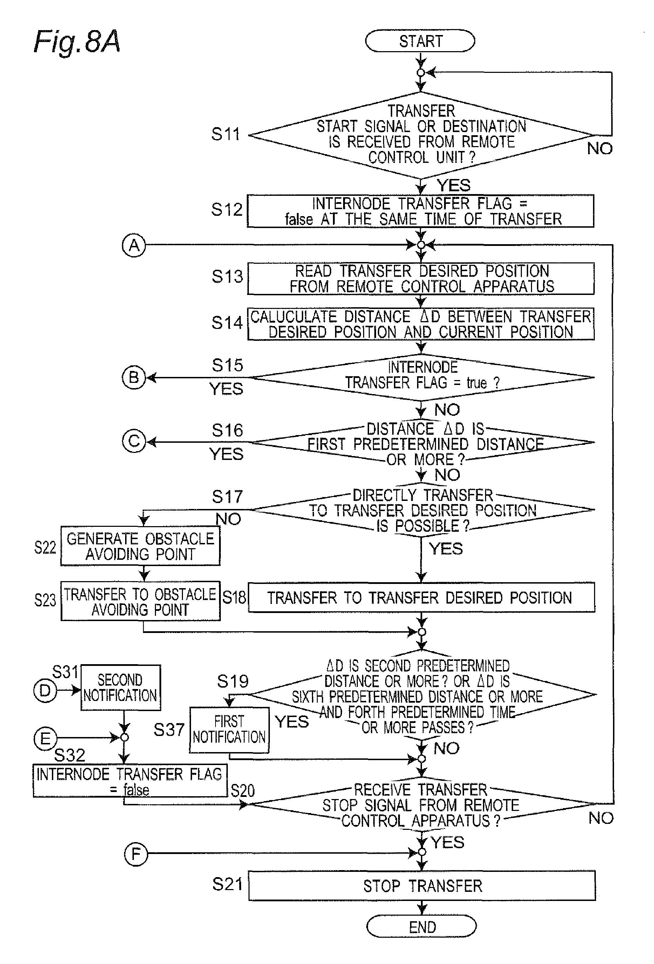

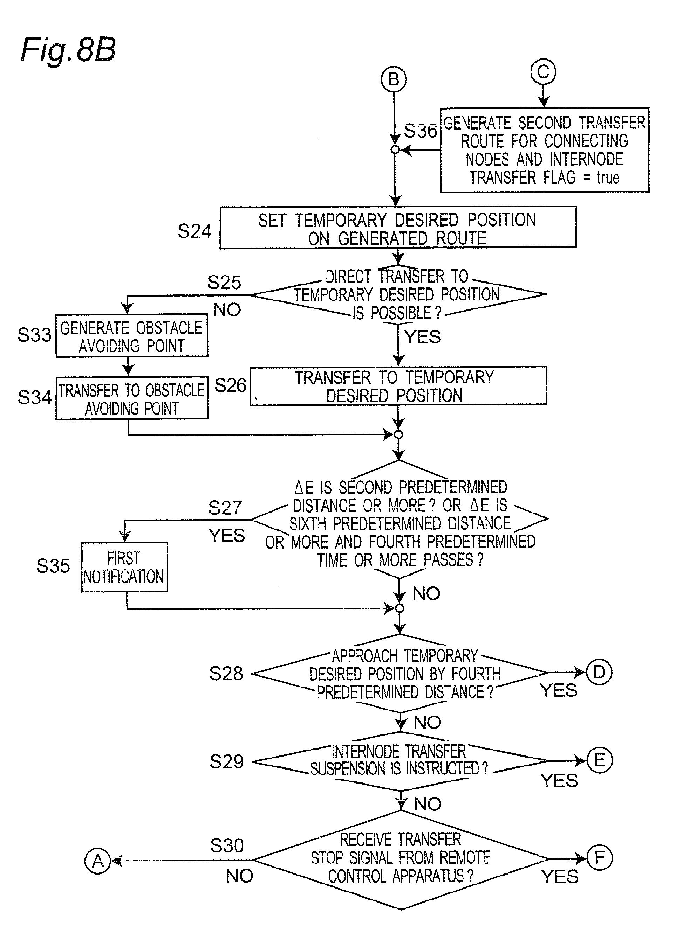

Next, a series of flow for the remote control of the moving apparatus 12 using the remote control system 11 according to the first embodiment is described with reference to Fig. 8A and Fig. 8B. It is preferable that the process in the series of the flow in Fig. 8A and Fig. 8B is executed at a high speed in a short time, for example, approximately every 10 ms.

First, at step S11 in Fig. 8A, the first evaluating unit 73 of the moving apparatus 12 determines whether the first communicating unit 29 of the moving apparatus 12 receives a move start signal or information about a destination from the second communicating unit 33 of the remote control apparatus 13.

Next, when the moving apparatus 12 receives the move start signal or the information about the destination (YES at step S11), at step S12 in Fig. 8, the first recognizing unit 23 and the first generating unit 53 start the move of the moving apparatus 12, and an internode move flag is set to false (NO) by the first generating unit 53.

Subsequently, at step S13 in Fig. 8A, the moving apparatus 12 reads out the target position received from the second communicating unit 33 of the remote control apparatus 13 to the first communicating unit 29, to input the position into the first calculating unit 72. The target position transmitted from the second communicating unit 33 of the remote control apparatus 13 is generated as described with reference to Fig. 2A to Fig. 2D, and Fig. 3. Further, the target position read out here is the target position just before stored in a temporary storage region of the first storage unit 24. However, when the target position is not saved in the temporary storage region and thus cannot be read out, the previous target position is used as it is.

When the move start signal or the information about the destination is not received (NO at step S11), step S11 in Fig. 8A is repeated until the first communicating unit 29 of the moving apparatus 12 receives the move start signal or the information about the destination.

Subsequently, at step S14 in Fig. 8A, the first calculating unit 72 of the moving apparatus 12 that reads out the target position at step S13 calculates the distance ΔD between the target position and the current position.

Subsequently, at step S15 in Fig. 8A, the first generating unit 53 determines whether the moving apparatus 12 moves on the second moving path. The second moving path is a moving path that includes a path connecting the nodes 45, as described previously. Concretely, the first generating unit 53 determines whether the internode move flag indicates true or false. The internode move flag is stored in the internal storage unit of the first generating unit 53. The internode move flag indicates true when the moving apparatus 12 moves on the second moving path, and indicates false when the moving apparatus 12 does not move on the second moving path (for example, the moving apparatus 12 moves on the first moving path). Since the internode move flag is set to false at step S12, this case is NO at step S15, and the process goes to step S16. If the internode move flag indicates true, the case is YES at step S15, and the process goes to step S24.

Next, when the moving apparatus 12 does not move on the second moving path (NO at step S15), the first calculating unit 72 of the moving apparatus 12 acquires the distance (interval) ΔD between the target position and the current position through calculation at step S16 in Fig. 8A. The first generating unit 53 determines whether the distance ΔD between the target position and the current position acquired by the first calculating unit 72 is the first predetermined distance (for example, 5m) or more. When the first generating unit 53 determines that the distance ΔD is the first predetermined distance or more (YES at step S16), the process goes to step S36. When the first generating unit 53 determines that the distance ΔD is less than the first predetermined distance (NO at step S16), the process goes to step S17.

Next, the first generating unit 53 determines at step S17 whether the moving apparatus 12 can move directly from the current position to the target position along the first moving path. When the first generating unit 53 determines that the moving apparatus 12 can directly move from the current position to the target position along the first moving path (YES at step S17), the process goes to step S18. When the first generating unit 53 determines that the moving apparatus 12 cannot directly move from the current position to the target position along the first moving path (NO at step S17), the process goes to step S22.

The moving apparatus 12 autonomously moves from the current position to the target position along the first moving path by means of the first generating unit 53, the second control unit 26, and the driving unit 22 at step S18.

Next, the first recognizing unit 23 determines at step S19 whether the distance ΔD between the target position and the current position is the second predetermined distance (for example, 3 m) or more, and the distance ΔD continues to be the sixth predetermined distance or more for the fourth predetermined time or more. The first recognizing unit 23 determines at step S19 the case where the distance ΔD is the second predetermined distance or more as YES. In addition, when the distance ΔD continues to be the sixth predetermined distance or more for the fourth predetermined time or more, the first recognizing unit 23 determines this state as YES at step S19. That is to say, when the distance ΔD is less than the second predetermined distance and the distance ΔD continues to be the sixth predetermined distance or more for less than the fourth predetermined time, the first recognizing unit 23 determines this state as NO at step S19. When the first recognizing unit 23 determines as NO at step S19, the process goes to step S20. When the first recognizing unit 23 determines as YES at step S19, the process goes to step S37.

The notifying unit 75 of the remote control apparatus 13 notifies the manipulator of first notification at step S37. The first notification is to notify the manipulator of the remote control apparatus 13 that the target position and the current position of the moving apparatus 12 are excessively separated from each other. As examples of the first notification by the notifying unit 75, a motion resistance of the manipulating unit 32 is increased (a resistance force is allowed to act on the joystick 32c by the motor or the like), a sound is made, light is emitted, and the position of the first icon 36 is reset and displayed on the position of the second icon 35. Thereafter, the process goes to step S20.

Next, the first control unit 41 determines at step S20 whether the first communicating unit 29 of the moving apparatus 12 receives a move stop signal from the second communicating unit 33 of the remote control apparatus 13. When the determination is made that the first communicating unit 29 of the moving apparatus 12 receives the move stop signal (YES at step S20), the process goes to step S21. When the determination is made that the first communicating unit 29 of the moving apparatus 12 does not receive the move stop signal (NO at step S20), the process returns to step S13. The determination is made at step S20 whether a move stop signal representing emergency stop etc. from the manipulator's manipulation is transmitted from the remote control apparatus 13 to the moving apparatus 12. The first control unit 41 determines whether the moving apparatus 12 is stopped, based on the move stop signal.

Next, the autonomous move of the moving apparatus 12 is stopped at step S21. Thereafter, the series of the process is ended.

On the other hand, when the first acquiring unit 27 detects an obstacle around the moving apparatus 12 and the moving apparatus 12 cannot directly move to the target position, the second generating unit 74 generates an obstacle avoiding point in order to avoid the obstacle. The moving apparatus 12 moves to the obstacle avoiding point so as to avoid the obstacle. In Fig. 8A, at step S22 (NO at step S17) at which the first acquiring unit 27 detects the obstacle, after the second generating unit 74 generates the obstacle avoiding point, the process goes to step S23.

Next, the first recognizing unit 23, the first generating unit 53, the second control unit 26, the driving unit 22, and the second generating unit 74 control the moving apparatus 12 at step S23, so that the moving apparatus 12 is allowed to run along the obstacle avoiding point generated by the second generating unit 74. Thereafter, the process goes to step S19.

The above steps S17 to S23 are the normal flow of the move of the moving apparatus 12 along the first path as the shortest path between the current position and the target position.

On the other hand, in Fig. 8B, when the internode move flag indicates true (YES at step S15), the moving apparatus 12 moves along the second moving path. Further, when the distance ΔD is the first predetermined distance or more (YES at step S16), a determination is made that the moving apparatus 12 moves on the second moving path. In this case, at step S36, the second moving path to a destination that connects the nodes is generated, and the internode move flag is set a true. The target position may be determined as the destination here.

After the process in these cases (YES at step S15, YES at step S16, and step S36 is executed) is executed, the temporary target position on the second moving path generated by the temporary target position generating unit 71 is set by the first evaluating unit 73 at step S24. Thereafter, the process goes to step S25.

Next, the first evaluating unit 73 determines at step S25 whether the moving apparatus 12 can directly move to the temporary target position on the second moving path set at step S24.

When the determination is made that the moving apparatus 12 can directly move from the current position to the target position (YES at step S25), the process goes to step S26. When the first acquiring unit 27 finds an obstacle and thus the determination is made that the moving apparatus 12 cannot directly move from the current position to the temporary target position (NO at step S25), the process goes to steps S33 and S34. Similarly to steps S22 and S23, after an obstacle is avoided, the process goes to step S27.

Next, the moving apparatus 12 is allowed to move on the second moving path from the current position to the temporary target position by the first generating unit 53, the second control unit 26, and the driving unit 22 at step S26.

Next, similarly to step S19, when the distance (interval) ΔE between the temporary target position on the second moving path and the current position of the moving apparatus 12 is the second predetermined distance or more, the first recognizing unit 23 determines this case as YES at step S27. Further, when the distance ΔE continues to be the sixth predetermined distance or more for the fourth predetermined time or more, the first recognizing unit 23 determines this case as YES at step S27. That is to say, the distance ΔE is less than the second predetermined distance, and the distance ΔE continues to be the sixth predetermined distance or more for less than the fourth predetermined time, the first recognizing unit 23 determines this case as NO at step S27.

When the first recognizing unit 23 determines as NO at step S27, the process goes to step S28. When the first recognizing unit 23 determines as YES at step S27, the process goes to step S35.

Similarly to step S37, the notifying unit 75 of the remote control apparatus 13 notifies the manipulator of the first notification at step S35. The first notification is to notify the manipulator of the remote control apparatus 13 that the target position and the current position of the moving apparatus 12 are excessively separated from each other. Thereafter, the process goes to step S28.

Next, the first recognizing unit 23, then, determines at step S28 whether the moving apparatus 12 approaches the temporary target position by the fourth predetermined distance. When the first recognizing unit 23 determines that the moving apparatus 12 approaches the temporary target position by the fourth predetermined distance (the distance ΔE is the fourth predetermined distance or less) (YES at step S28), the process goes to step S31. When the first recognizing unit 23 determines that the moving apparatus 12 does not approach the temporary target position by the fourth predetermined distance (NO at step S28), the process goes to step S29. When the distance ΔE is the fourth predetermined distance or less, as described with reference to Fig. 6, a process switching the moving path from the second moving path using the nodes 45 into the normal first moving path is executed. Concretely, when the distance ΔE is the fourth predetermined distance or less, second notification representing return to the first moving path is conducted at step S31, and the process goes to step S32. The second notification is conducted by a similar method to the first notification.

Next, at step S29, similarly to step S20, the first control unit 41 determines whether the first communicating unit 29 of the moving apparatus 12 receives the move stop signal from the second communicating unit 33 of the remote control apparatus 13. When the determination is made that the first communicating unit 29 of the moving apparatus 12 receives the move stop signal (YES at step S30), the process goes to step S21. When the determination is made that the first communicating unit 29 of the moving apparatus 12 does not receive the move stop signal (NO at step S30), the process returns to step S13. The determination is made at step S30 whether the move stop signal of emergency stop etc. from the manipulator's manipulation is transmitted from the remote control apparatus 13 to the moving apparatus 12. The first control unit 41 determines whether the moving apparatus 12 is stopped, based on the move stop signal.

Further, at step S32, the internode move flag indicates false (NO), and the move on the second moving path is canceled. Thereafter, the process goes to step S20.

Steps S36, and S24 to S30 described above are the internode move flow of the moving apparatus 12 on the second moving path connecting the nodes.

When the moving apparatus 12 does not arrive at the target position (NO at steps S20 and S30), the process returns to step S13, steps after step S13 are repeated until the moving apparatus 12 arrives at the target position.

In the first embodiment, the moving apparatus 12 is not directly and remotely operated, but the manipulator remotely manipulates the target position by the manipulating unit 32. The moving apparatus 12 can move while avoiding an environmental object without depending on an environmental object (a move obstacle (for example, a move body such as a person) in environmental objects around the moving apparatus 12, that is not present in map information) that cannot be acquired by the remote control apparatus 13. For this reason, the manipulator uses the remote control system 11 according to the first embodiment so as to be capable of remotely manipulating the moving apparatus 12 without recognizing an environmental object that is not present in the map information.

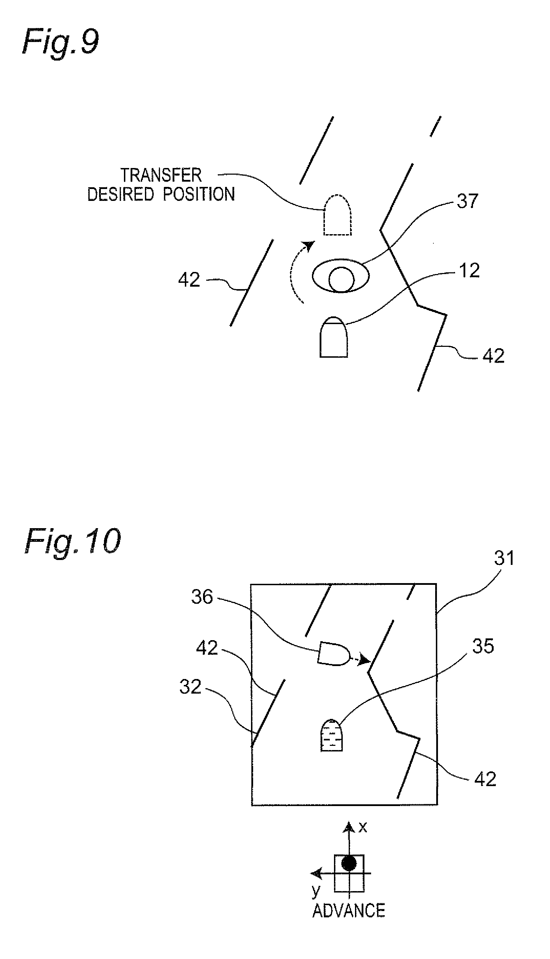

Fig. 9 is a schematic view illustrating the moving apparatus 12 according to the first embodiment and its periphery. As shown in Fig. 9, since target position is set on a place separated from the moving apparatus 12, a move obstacle in the environmental objects including the move body 37 is occasionally held between the moving apparatus 12 and the target position. Particularly when the move body 37 is a person, this environmental object is not included in the map information, and thus is not displayed on the first monitor 31. For this reason, the manipulator of the remote control apparatus 13 cannot recognize the move body 37, and cannot set the target position in consideration of the move body 37. The moving apparatus 12 according to the first embodiment autonomously moves toward the target position wirelessly transmitted from the remote control apparatus 13 in such a state, and can automatically avoid the move body 37 detected by the first acquiring unit 27. At this time, since the second icon 35 is displayed on the first monitor 31 of the remote control apparatus 13 based on recognized information about the self position of the moving apparatus 12 wirelessly transmitted from the moving apparatus 12. For this reason, the second icon 35 does not linearly move toward the first icon 36, but moves to bypass a place where nothing is present on the first monitor 31.

Further, in the moving apparatus 12 according to the first embodiment, when the communication between the moving apparatus 12 and the remote control apparatus 13 is cut off, the first storage unit 24 continuously treats the target position and the move target orientation at the cut-off time as the target position. In such a manner, the moving apparatus 12 does not suddenly stop due to the communication cut-off, and can continue to move to the already set target position.

In the remote control system 11 according to the first embodiment, the target position may include the information about the target position and the move target orientation, but may be information that does not include the move target orientation but only the target position.

As described above, according to the first embodiment, the use of the remote control apparatus 13 enables the moving apparatus 12 to move efficiently to the target position. In other words, since the conventional remote control system should set the target position in a cubic space displayed on the monitor, it is difficult to intuitively understand an interval between a surrounding environmental object (a move obstacle such as a wall) and the target position, and occasionally difficult to set the target position on the monitor. However, in the first embodiment, the interval between the surrounding environmental object (a move obstacle such as a wall) and the target position can be intuitively understood, and the target position can be easily set by using the first monitor 31.

### (Second Embodiment)

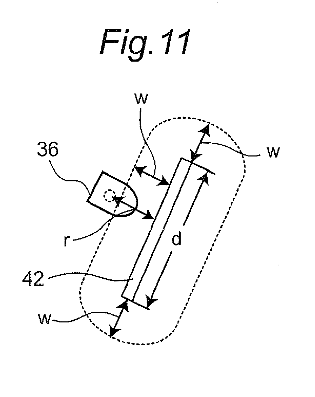

Fig. 10 is a view illustrating a first monitor 31 and a manipulating unit 32 of a remote control apparatus 13 according to a second embodiment of the present invention. Fig. 11 is a view illustrating a relationship between a first icon 36 and a wall 42 according to the second embodiment.

A different point of the second embodiment from the first embodiment is described below with reference to the drawings.

The map information of the remote control apparatus according to the second embodiment is characterized by including a forbidden region forbidding approach of a moving apparatus 12. A second calculating unit 77 of the remote control apparatus 13 forbids the manipulating unit 32 to set a target position on the forbidden region (for example, a wall, a staircase or the like).

As shown in Fig. 10, in a case where a front of the first icon 36 faces a right direction (the right direction in Fig. 10), even when the manipulator tilts a joystick 32c to the front (a plus direction of an x axis) to move the first icon 36 to a direction of an arrow, the first icon 36 does not move to the direction of the arrow in front of the wall 42. That is to say, the second calculating unit 77 prevents the target position from being set beyond the wall 42. At this time, the wall 42 is included as the move forbidden line segment in the map information. Since the second calculating unit 77 cannot set the target position on the wall 42, the first icon 36 is not beyond the wall 42.

The second calculating unit 77 may be prevented from setting the target position also around the move forbidden line segment. In such a manner, the moving apparatus 12 does not move around the wall 42.

Concretely, in the second embodiment, as shown in Fig. 10, the second calculating unit 77 does not set the target position in a predetermined distance range W obtained by adding a predetermined distance (for example, about a few hundred mm) for safety to a maximum radius from a rotational center of the moving apparatus 12 with respect to the wall 42 as a move forbidden line segment. For this reason, the second calculating unit 77 of the remote control apparatus 13 calculates a distance r between the center of the first icon 36 (target position) and the move forbidden line segment, from the map information. When this distance is the distance W or less, the setting of the target position is forbidden. In such a manner, the moving apparatus 12 does not approaches the wall 42, and higher safety can be secured.

### (Third Embodiment)

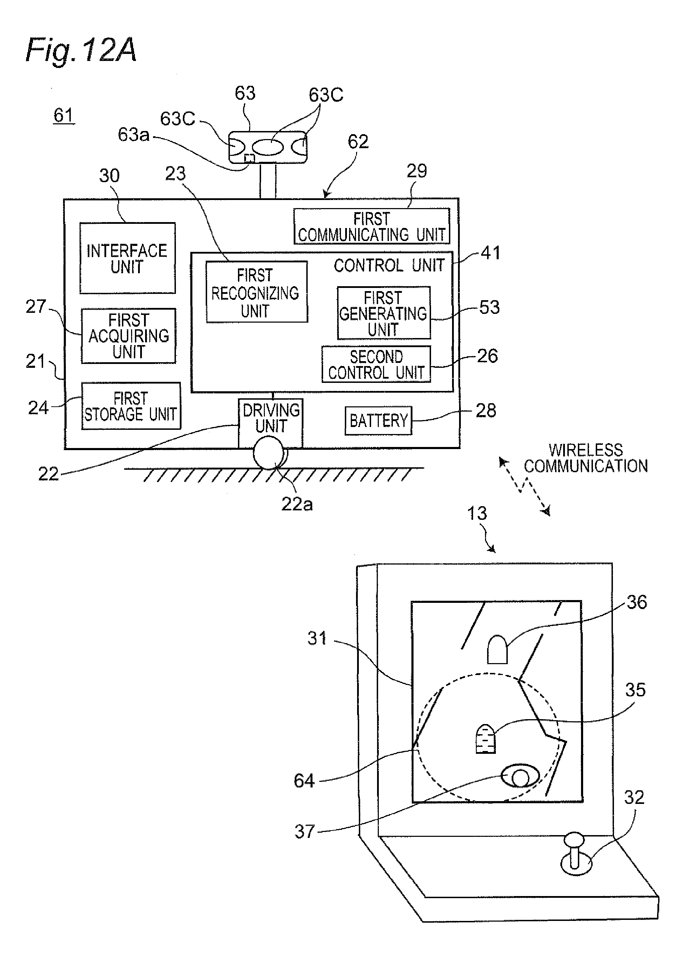

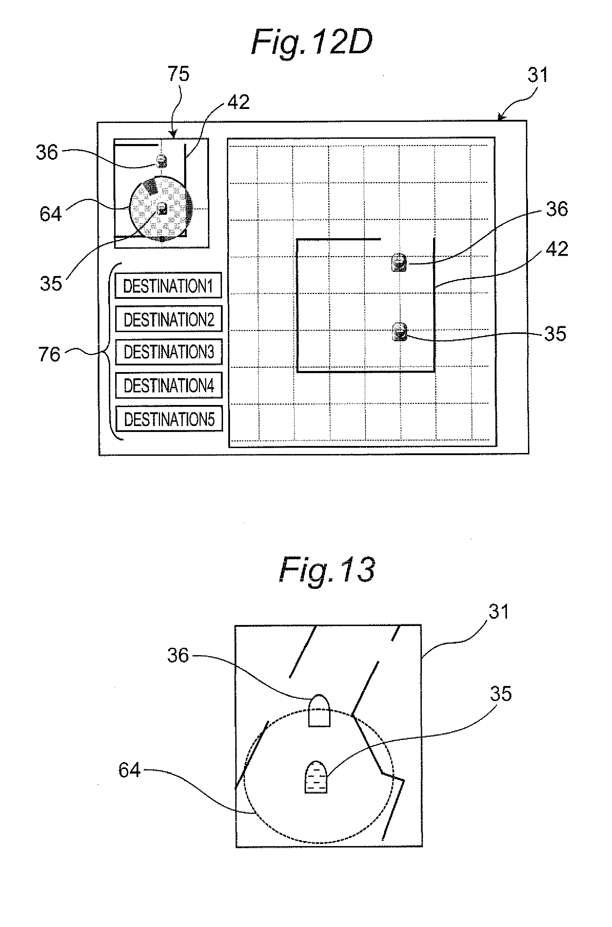

Fig. 12A is a schematic view of a remote control system 61 according to a third embodiment of the present invention. The remote control system 61 includes at least a moving apparatus 62 and a remote control apparatus 13. Fig. 13 is a view illustrating a first monitor 31 of the remote control apparatus 13 according to the third embodiment.

A different point of the third embodiment from the first embodiment is described below with reference to the drawings.

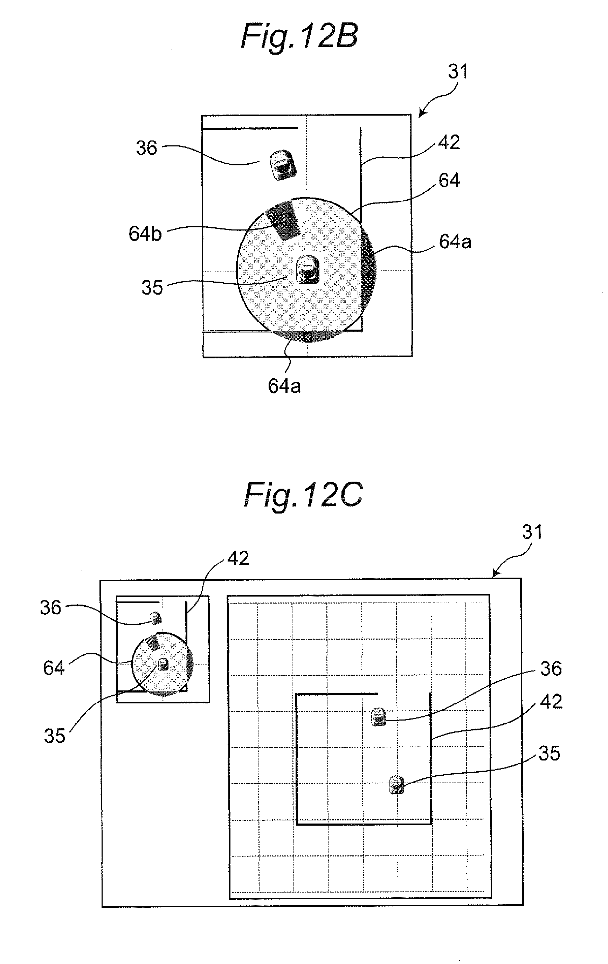

As shown in Fig. 12A, the moving apparatus 62 according to the third embodiment has first photographing units 63 photographing surroundings. The first photographing units 63 have cameras 63C at four corners of a vehicle body of the moving apparatus 62. An image forming unit 63a embedded in the first photographing unit 63 synthesizes images photographed by the four cameras 63C so as to generate an image 64 viewed from above the moving apparatus 62 (see Fig. 12B). The remote control apparatus 13 superposes the image 64 obtained by the image forming unit 63a of the first photographing unit 63 on the map information, and displays the superposed image on a first monitor 31 (see Fig. 12C). It is desirable that, when the images photographed by the four cameras 63C are synthesized and the image 64 viewed from above the moving apparatus 62 is generated, the image 64 in the predetermined distance from the moving apparatus 62 is cut out so as to be displayed. At this time, a first icon 36 as the target position is superposed on the display range of the map so as to be displayed. A region, which is obscured by the wall (or an obstacle) and is not photographed by the cameras 63C, is displayed as a wall portion 64a (or an obstacle portion 64b) that is a blackened region as shown in Fig. 12B.

Not shown, but when the target position is not within that map range, a direction of the target position is displayed by an arrow icon (for example, "←") or the like. The arrow icon is displayed as information different from wide-region map information (figure on a right side of Fig. 12C) (displayed on an upper left side in Fig. 12C).

In such a manner, since actual images are superposed, the third embodiment has an advantage of very easy understanding of the manipulator.

In such a manner, the manipulator acquires environment information around the moving apparatus 62 that is not recorded in the map information, through the first photographing units 63, and can set the target position through the manipulating unit 32. That is to say, an environmental object such as a person that is not recorded in the map information is recognized by the manipulator, and the manipulator can set the target position. Concretely, the manipulator recognizes a move body 37 that is not recorded in the map information, and can set the target position that avoids the move body 37.

In a remote control system 61 according to the third embodiment, the image acquired by the first photographing units 63 is displayed on the first monitor 31 within a predetermined distance from the moving apparatus 62, and a change of the target position (the center of the first icon 36) may be limited to a scope within a predetermined distance from the moving apparatus 62 that is the same as that of the image 64 displayed on the first monitor 31.

A control is made so that the target position (the center of the first icon 36) cannot be set on the outside of the scope of the image 64 displayed on the first monitor 31 shown in Fig. 13. As a result, the manipulator does not set the target position on a move obstacle in a surrounding environmental object that is not recorded in the map information, and suitably sets the target position.

Further, the change of target position may be limited to the scope within the predetermined distance from the moving apparatus 62 regardless of the image. When the change position of the target position is limited to the scope within the predetermined distance, the target position is not greatly separated from the moving apparatus 62. Concretely, as one example, it is desirable that the change position is set within 2 m that is around the same width of a passage 80P.

Coordinates of destinations to which the moving apparatus 62 frequently goes are stored in a first storage unit 24 and a third storage unit 34 in advance, and a first list selecting unit 76 may be provided to the remote control apparatus 13. The first list selecting unit 76 displays the destinations related to the storage units 24 and 34 as a destination list on a manipulation screen of the first monitor 31 of the remote control apparatus 13 as shown in Fig. 12D. When a destination is selected by pressing a button corresponding to a target destination, the first list selecting unit 76 reads out the coordinate of the selected destination from the storage units 24 and 34. A first generating unit 53 generates a moving path, so that the move of a moving apparatus 12 can be started.

### (Fourth Embodiment)

Fig. 14 is a view illustrating a first monitor 31 of a remote control system 11 according to a fourth embodiment of the present invention.

A point of the fourth embodiment from the first embodiment is described below with reference to the drawings.

In the fourth embodiment, as shown in Fig. 14, an image forming unit 31a of a remote control apparatus 13 displays a first icon 36 with the orientation of the icon 36 always being fixed to a predetermined direction on the first monitor 31. For example, an advancing direction of the first icon 36 is always an up direction of the first monitor 31. The image forming unit 31a always displays the first icon 36 which faces the up direction of the first monitor 31, so that a manipulating direction of a joystick 32c matches with the direction of the first icon 36. As a result, the manipulator easily understands a move target orientation on the target position, and can easily set the target position.

By properly combining arbitrary embodiments of the aforementioned various embodiments, the effects owned by each of them can be made effectual.

### INDUSTRIAL APPLICABILITY

The remote control system according to the present invention is easily manipulated, and is useful to a remote control system of a communication robot.

The entire disclosure of Japanese Patent Application No. 2011-241892 filed on November 4, 2011, including specification, claims, drawings, and summary are incorporated herein by reference in its entirety.

Although the present invention has been fully described in connection with the embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A remote control system comprising a moving apparatus and a remote control apparatus, wherein
the remote control apparatus has a manipulating unit, a communicating unit that transmits a target position input by the manipulating unit to the moving apparatus, and a detecting unit that detects an input value of the manipulating unit as an amount of change, and
the moving apparatus has a storage unit that stores map information, a control unit that autonomously moves the moving apparatus to the target position along a moving path, and the control unit that autonomously moves the moving apparatus while changing the target position in accordance with the amount of change.

2. The remote control system according to claim 1, wherein
the control unit of the moving apparatus adds the amount of change from the manipulating unit to a current position of moving apparatus so as to acquire the target position.

3. The remote control system according to claim 1, wherein
the remote control apparatus further comprises a notifying unit that sends a notification when a distance between a current position and the target position of the moving apparatus is a predetermined distance or more, or the moving apparatus does not arrive at the target position for a predetermined time or more.

4. The remote control system according to claim 1, wherein
the control unit of the moving apparatus further comprises a generating unit that generates a moving path connecting the current position and the target position based on a connecting relationship of nodes included in the map information when the distance between the current position and the target position of the moving apparatus is a predetermined distance or more, or the moving apparatus does not arrive at the target position for a predetermined time or more.

5. The remote control system according to claim 4, wherein
the generating unit fixes the moving path connecting the nodes when the moving apparatus starts to autonomously move along the moving path.

6. The remote control system according to claim 1, wherein
the remote control apparatus further comprises a monitor that displays a moving apparatus icon and a target position icon while superimposed on the map information, the moving apparatus icon representing the current position of the moving apparatus and the target position icon representing the target position.

7. The remote control system according to claim 1, wherein
the remote control unit forbids the target position from being set on a forbidden region included in the map information.

8. The remote control system according to claim 7, wherein
the forbidden region includes a wall in the map information.

9. The remote control system according to claim 6, wherein
the moving apparatus has a photographing unit that photographs a surrounding, and
the remote control apparatus superposes an image photographed by the photographing unit on the map information so as to display a superposed image on the monitor.

10. The remote control system according to claim 1, further comprising:
photographing units arranged on four corners of a vehicle body of the moving apparatus;
an image forming unit that synthesizes images acquired by the photographing units so as to generate an image viewed from above the moving apparatus; and
a monitor that is arranged on the remote control unit and displays the image formed by the image forming unit.

11. The remote control system according to claim 6, wherein
the remote control unit displays the target position icon on the monitor with an orientation of the target position icon always being fixed to a predetermined direction.

## Amended claims

### Amended claims under Art. 19.1 PCT

**1.** (Amended)
A remote control system comprising a moving apparatus and a remote control apparatus, wherein
the remote control apparatus has a manipulating unit, a detecting unit that detects an input value of the manipulating unit as an amount of change, and a communicating unit that transmits a target position input by the manipulating unit and the amount of change to the moving apparatus,
the moving apparatus has a storage unit that stores map information, and a control unit that autonomously moves the moving apparatus to the target position along a moving path while changing the target position in accordance with the amount of change, and
the remote control apparatus comprises a notifying unit that sends a notification when a distance between a current position and the target position of the moving apparatus is a first predetermined distance or less.

**2.** (Amended)
A remote control system comprising a moving apparatus and a remote control apparatus, wherein
the remote control apparatus has a manipulating unit, a detecting unit that detects an input value of the manipulating unit as an amount of change, and a communicating unit that transmits a target position input by the manipulating unit and the amount of change to the moving apparatus,
the moving apparatus has a storage unit that stores map information, and a control unit that autonomously moves the moving apparatus to the target position along a moving path while changing the target position in accordance with the amount of change, and
the remote control apparatus comprises a notifying unit that sends a notification when a distance between a current position and the target position of the moving apparatus is a second predetermined distance or more, or the moving apparatus does not arrive at the target position for a predetermined time or more.

**3.** (Amended)
A remote control system comprising a moving apparatus and a remote control apparatus, wherein
the remote control apparatus has a manipulating unit, a detecting unit that detects an input value of the manipulating unit as an amount of change, and a communicating unit that transmits a target position input by the manipulating unit and the amount of change to the moving apparatus,
the moving apparatus has a storage unit that stores map information, and a control unit that autonomously moves the moving apparatus to the target position along a moving path while changing the target position in accordance with the amount of change, and
the control unit of the moving apparatus comprises a generating unit that generates a moving path connecting a current position and the target position based on a connecting relationship of nodes included in the map information when a distance between the current position and the target position of the moving apparatus is a predetermined distance or more, or the moving apparatus does not arrive at the target position for a predetermined time or more.

**4.** (Amended)
The remote control system according to claim 1, wherein
when the distance between the current position and the target position of the moving apparatus is the first predetermined distance or less after the generating unit generates the moving path connecting the current position and the target position based on a connecting relationship of nodes included in the map information, the control unit of the moving apparatus autonomously moves the moving apparatus to the target position while changing the target position in accordance with the amount of change transmitted from the remote control apparatus.

**5.** The remote control system according to claim 4, wherein
when the moving apparatus starts to autonomously move along the moving path, the generating unit fixes the moving path connecting the nodes.

**6.** (Amended)
The remote control system according to any one of claims 1 to 3, wherein
the remote control apparatus further comprises a monitor that displays a moving apparatus icon and a target position icon while superimposed on the map information, the moving apparatus icon representing the current position of the moving apparatus and the target position icon representing the target position.

**7.** (Amended)
The remote control system according to any one of claims 1 to 3, wherein
the remote control unit forbids the target position from being set on a forbidden region included in the map information.

**8.** The remote control system according to claim 7, wherein
the forbidden region includes a wall in the map information.

**9.** The remote control system according to claim 6, wherein
the moving apparatus has a photographing unit that photographs a surrounding, and
the remote control apparatus superposes an image photographed by the photographing unit on the map information so as to display a superposed image on the monitor.

**10.** (Amended)
The remote control system according to any one of claims 1 to 3, further comprising:
photographing units arranged on four corners of a vehicle body of the moving apparatus; and
an image forming unit that synthesizes the images acquired by the photographing units so as to generate an image viewed from above the moving apparatus; and
a monitor that is arranged on the remote control unit and displays the image formed by the image forming unit.

**11.** The remote control system according to claim 6, wherein
the remote control unit displays the target position icon on the monitor with an orientation of the target position icon always being fixed to a predetermined direction.
